# EUROPEAN PATENT APPLICATION

(11) **EP 4 458 161 A1**
(43) Date of publication of application: **06.11.2024**
(21) Application number: 22915600.5
(22) Date of filing: 28.11.2022
(51) Int. Cl.: A23L 2/00, A23L 2/38, A23L 2/52, C12C 5/02, C12G 3/04

(54) **BEVERAGE CONTAINING ALIPHATIC ALCOHOL AND GABA**

(30) Priority: 27.12.2021 JP 2021212627
(71) Applicant: Suntory Holdings Limited, Osaka 530-8203 (JP)
(72) Inventor: IIMI, Yuya, Kawasaki-shi, Kanagawa 211-0067 (JP); KAMOGAWA, Shun, Kawasaki-shi, Kanagawa 211-0067 (JP); MIURA, Yasushi, Kawasaki-shi, Kanagawa 211-0067 (JP); KONO, Mika, Kawasaki-shi, Kanagawa 211-0067 (JP)
(74) Representative: Vossius & Partner Patentanwälte Rechtsanwälte mbB
(86) International application number: PCT/JP2022/043668
(87) International publication number: WO 2023/127369

(57) **Abstract**

The present invention addresses the problem of providing a means for enhancing the alcohol taste of a low-alcohol beverage or a non-alcoholic beverage. The present invention uses γ-aminobutyric acid and a C4 or C5 aliphatic alcohol.

## Description

### TECHNICAL FIELD

The present invention relates to a low-alcohol beverage or a non-alcohol beverage containing an aliphatic alcohol having 4 or 5 carbon atoms and γ-aminobutyric acid (GABA) and a method related thereto.

### BACKGROUND ART

Demand for various non-alcohol beverage is increasing in recent years with a rise in health consciousness of consumers or due to an increase in penalty for drunk driving under the Road Traffic Law. For example, non-alcohol beverages tasting like chuhais and cocktails are called chuhai-taste beverages and non-alcohol cocktails, respectively, or also collectively called alcohol-taste beverages. Non-alcohol beverages have been widely accepted.

For these non-alcohol beverages, the tastes of alcoholic beverages which are the models for the non-alcohol beverages are required. Since the beverages do not contain alcohol, the beverages are however short of flavor derived from alcohol. Inventions using specified aliphatic alcohols for imparting an alcohol-like taste and a brewage-like taste to non-alcoholic beverages or low-alcohol beverages (PTLS 1 and 2) are known with respect to this.

It is known that GABA imparts thickness of taste to non-fermented alcohol-taste beverages or contributes to a relaxation effect (PTL 3).

### CITATION LIST

### PATENT LITERATURE

PTL 1: Japanese Patent Laid-Open No. 2012-60975
PTL 2: Japanese Patent Laid-Open No. 2016-185140
PTL 3: Japanese Patent Laid-Open No. 2017-184697

### SUMMARY OF INVENTION

### TECHNICAL PROBLEM

The present inventors have found that although techniques shown in PTLs 1 and 2 can impart flavor typical of liquor or an alcohol-like taste, the impartation is not necessarily sufficient.

Accordingly, an object of the present invention is to provide means for increasing a liquor-like taste imparted by the specified aliphatic alcohol to low-alcohol beverages or non-alcohol beverages.

### SOLUTION TO PROBLEM

The present inventors have earnestly examined and consequently found that the addition of GABA to a low-alcohol beverage or a non-alcohol beverage containing an aliphatic alcohol having 4 or 5 carbon atoms can increase the liquor-like taste.

The present invention relates to, but is not limited to, the following.
1. A beverage having an alcohol content of less than 3 v/v%, containing an aliphatic alcohol having 4 or 5 carbon atoms and γ-aminobutyric acid, wherein the total content of the aliphatic alcohol is 1 to 300 ppm.
2. The beverage according to 1, wherein a content of γ-aminobutyric acid is 10 ppm or more.
3. The beverage according to 1 or 2, wherein the total content of the aliphatic alcohol is 1 to 200 ppm, and the content of γ-aminobutyric acid is 50 to 5000 ppm.
4. The beverage according to any one of 1 to 3, wherein the aliphatic alcohol having 4 or 5 carbon atoms is selected from the group consisting of 2-methyl-1-propanol, 3-methyl-1-butanol, and 2-methyl-1-butanol.
5. The beverage according to any one of 1 to 4, wherein the beverage has an alcohol content of 0.00 v/v%.
6. A method for increasing a liquor-like taste of a beverage having an alcohol content of less than 3 v/v%, including:
   a step of adjusting the total content of an aliphatic alcohol having 4 or 5 carbon atoms in the beverage to 1 to 300 ppm, and
   a step of adding γ-aminobutyric acid to the beverage.
7. The method according to 6, wherein a content of γ-aminobutyric acid in the beverage is adjusted to 10 ppm or more.

### ADVANTAGEOUS EFFECTS OF INVENTION

The beverage of the present invention can increase liquor-like taste. The "liquor-like taste" as used with respect to the present invention means that thickness typical of liquor; brewage-like depth, fullness, and aftertaste; and slight bitterness are felt.

### DESCRIPTION OF EMBODIMENTS

Hereinafter, a beverage and a method of the present invention will be described.

The "ppm" as used herein means ppm by weight/volume (w/v) unless otherwise specified, and this is synonymous with "mg/L". If a substance is described merely as "alcohol" herein, it means ethanol unless otherwise specified, and does not mean an aliphatic alcohol having 4 or 5 carbon atoms.

### (Aliphatic alcohol having 4 or 5 carbon atoms)

The beverage of the present invention contains an aliphatic alcohol having 4 or 5 carbon atoms. The beverage may contain one of the aliphatic alcohols, or may contain two or more of the aliphatic alcohols. The total content of the aliphatic alcohol in the beverage is 1 to 300 ppm, preferably 1 to 200 ppm, and more preferably 3 to 80 ppm. Although having a low alcohol content or containing no alcohol, the beverage having a flavor typical of liquor can be provided due to this characteristic.

Examples of the aliphatic alcohol include 2-methyl-1-propanol, 1-butanol, 3-methyl-1-butanol, 2-methyl-1-butanol, 1-pentanol, and 2-pentanol. The aliphatic alcohol is preferably selected from the group consisting of 2-methyl-1-propanol, 3-methyl-1-butanol, and 2-methyl-1-butanol, and is more preferably 3-methyl-1-butanol.

The content of the aliphatic alcohol in the beverage of the present invention may be measured by any known method such as GC-MS or HPLC, and can be measured, for example, by GC-MS under the following conditions.

### <Conditions for measuring 3-methyl-1-butanol>

- Column: IC-for amine (30 m × 0.32 mm i.d.)
- Oven: 40°C (5 min) - 10°C/min - 110°C (0 min) - 20°C/min - 280°C (9.5 min)
- Column flow rate: 2.5 ml/min (constant flow)
- Split ratio: 1:10:00
- Inlet temperature: 200°C
- Transfer line temperature: 280°C
- Ion source temperature: 230°C
- m/z = 70

The above-mentioned analysis conditions can also be used for analyzing other aliphatic alcohols. Specifically, 2-methyl-1-propanol can be measured using m/z = 43 as an index under the same measurement conditions as those of 3-methyl-1-butanol, and 2-methyl-1-butanol can be measured using m/z = 70 as an index under the same measurement conditions as those of 3-methyl-1-butanol.

### (GABA)

The beverage of the present invention contains γ-aminobutyric acid (GABA). GABA can increase the liquor-like taste of a low-alcohol beverage or a non-alcohol beverage in combination with the aliphatic alcohol.

The content of GABA in the beverage of the present invention is preferably 10 ppm or more, more preferably 10 to 5000 ppm, more preferably 25 to 5000 ppm, more preferably 50 to 5000 ppm, more preferably 60 to 5000 ppm, and more preferably 60 to 500 ppm.

In a preferable aspect of the beverage of the present invention, the total content of the aliphatic alcohol is 1 to 200 ppm, and the content of GABA is 50 to 5000 ppm. In another preferable aspect of the beverage of the present invention, the total content of the aliphatic alcohol is 1 to 200 ppm, and content of GABA is 60 to 5000 ppm. In another preferable aspect of the beverage of the present invention, the total content of the aliphatic alcohol is 1 to 200 ppm, and the content of GABA is 60 to 500 ppm.

The content of GABA may be measured by any known method such as GC-MS or HPLC .

### (Low-alcohol beverage and non-alcohol beverage)

The beverage of the present invention is a low-alcohol beverage or a non-alcohol beverage, in other words, the beverage of the present invention has a low alcohol content or contains no alcohol. The alcohol content of the beverage of the present invention is specifically less than 3 v/v%. The content may be 2.0 v/v% or less, 1.0 v/v% or less, or 0.00 v/v%.

The non-alcohol beverage of the present invention does not exclude a beverage containing alcohol in so minute an amount as to be undetectable. The alcohol content of the non-alcohol beverage of the present invention is preferably 0.00 v/v%. In description for confirmation, "0.00 v/v%" also includes numerical values such as 0.001 v/v% which can be rounded off to be 0.00 v/v%.

Examples of the non-alcohol beverage include alcohol-taste beverages having tastes like alcoholic beverages. Examples of the alcohol-taste beverage include, but not limited to, beer-taste beverages, chuhai-taste beverages, non-alcohol cocktails, sour-taste beverages, wine-taste beverages, and sake-taste beverages. When these beverages are described in more detail by giving chuhai-taste beverages, non-alcohol cocktails, and sour-taste beverages as examples, these beverages refer to beverages that are non-alcohol beverages and achieve flavors like chuhais (that mean alcoholic carbonated beverages in which distilled liquor is diluted with other beverages such as water, soft drinks, and teas with respect to the present invention), cocktails (that mean beverages each containing a spirit or a liqueur, acidulous fruit juice such as a citrus fruit, a sweet component, and optionally carbon dioxide with respect to the present invention), and sours (that mean beverages each containing a spirit, acidulous fruit juice such as a citrus fruit, a sweet component, and carbon dioxide with respect to the present invention) as the models.

Alcohol may be incorporated into the low-alcohol beverage of the present invention by any means. The low-alcohol beverage of the present invention typically contains alcohol raw material, and therefore contains alcohol.

Examples of the alcohol raw material include, but not particularly limited to, for example spirits (rum, vodka, gin, tequila, or the like), liqueurs, whiskey, brandy, and shochu. Furthermore, the alcohol raw material may be brewage such as beer or wine. These alcohol raw materials can be used alone or in combination.

The type of the low-alcohol beverage of the present invention may be, but not particularly limited to, preferably a chuhai, a cocktail, and a sour.

The alcohol content of the beverage herein can be measured by any known method, for example, with a vibrating densimeter. Specifically, carbon dioxide is removed from the beverage by filtration or ultrasonic waves as needed to prepare a sample. The sample is subjected to steam distillation. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

### (Carbon dioxide)

The beverage of the present invention may contain carbon dioxide. Carbon dioxide can be incorporated into the beverage by a method commonly known to those skilled in the art. Although the method is not limited to the following, for example, carbon dioxide may be dissolved in the beverage under pressure, carbon dioxide may be mixed with the beverage in the piping of a mixer such as a carbonator manufactured by GEA, the beverage may be sprayed in a tank filled with carbon dioxide to make the beverage absorb carbon dioxide, or the beverage may be mixed with carbonated water. These means are appropriately used to regulate the carbon dioxide pressure.

If the beverage of the present invention contains carbon dioxide, the carbon dioxide pressure thereof is, but not particularly limited to, preferably 0.7 to 4.5 kgf/cm² and more preferably 0.8 to 2.8 kgf/cm². In the present invention, the carbon dioxide pressure can be measured with the gas volume measuring apparatus GVA-500A, manufactured by Kyoto Electronics Manufacturing Co., Ltd. For example, the sample temperature is adjusted to 20°C, the air in the container in the gas volume measuring apparatus is removed (snift), followed by the shaking, and the carbon dioxide pressure is then measured. The carbon dioxide pressure as used herein means carbon dioxide pressure at 20°C unless otherwise specified.

### (Fruit juice or vegetable juice)

The beverage of the present invention may contain fruit juice and/or vegetable juice. The fruit juice may be in any form of straight juice, which is juice squeezed from fruits to be used as it is, or concentrated juice, which is obtained by concentrating the squeezed juice. Transparent fruit juice or cloudy fruit juice can also be used. Whole fruit juice, obtained by crushing whole fruits including the skins and removing only particularly coarse hard solid matter such as seed therefrom, fruit puree, obtained by straining fruits, or fruit juice into which the pulp of dried fruits is crushed or that is extracted from the pulp can also be used. The vegetable juice can also be used in the same form as the form of the above-mentioned fruit juice.

Examples of fruit juices include, but are not limited to, juices from citrus fruits (e.g., orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa),* pomes *(e.g.,* apple, Japanese pear), drupes *(e.g.,* peach, Japanese apricot, apricot, Japanese plum, cherry), berries (e.g., grape, blackcurrant, blueberry), tropical and subtropical fruits (e.g., pineapple, guava, banana, mango, lychee), and fruity vegetables (e.g., strawberry, melon, watermelon). Any one of the aforementioned fruit juices may be used alone, or two or more of them may be used in combination. Examples of vegetable juices include, but are not limited to, tomato juice, corn juice, pumpkin juice, and carrot juice. Any one of the aforementioned vegetable juices may be used alone, or two or more of them may be used in combination. Also, a fruit juice and a vegetable juice may be used in combination.

The content of the fruit juice in the beverage of the present invention is not particularly limited, and is typically 0 to 100 w/w%, or less than 10 w/w% in terms of percent fruit juice content.

In the present invention, the "percent fruit juice content" in a beverage shall be calculated according to the conversion expression mentioned below using the amount (g) of a fruit juice added to 100 ml of a sample. Further, calculation of concentration factor shall be made as per the JAS guidelines, with the proviso that the sugar refractometer index for a sugar, honey, or the like added to a fruit juice is excluded. Percent fruit juice content (w/w%) = (Amount of fruit juice added (g)) × (concentration factor)/100 mL/(density of beverage) × 100

The content of the vegetable juice in the beverage of the present invention is not particularly limited, and is typically 0 to 100 w/w%, or less than 10 w/w%. The content of the vegetable juice is calculated in accordance with the content of the fruit juice in terms of the above-mentioned percent fruit juice content.

### (Other components)

As long as the effect of the present invention is not deteriorated, additives such as a sweetener, an acidulant, flavorings, vitamins, dyes, an antioxidant, a preservative, seasonings, extract, a pH adjustor, and a quality stabilizer to be commonly added to beverages can be added to the beverage in the present invention in addition.

### (Packaged beverage)

The beverage of the present invention can be provided in the form of a packaged beverage. The form of the container includes, but not limited to, metal containers such as cans, PET bottles, cartons, bottles, and pouches. For example, a sterilized packaged product can be produced by a method involving filling a container with the beverage of the present invention, followed by heat sterilization such as retort sterilization or a method involving sterilizing the beverage and filling a container with the sterilized beverage.

### (Method)

In another aspect, the present invention is a method for increasing the liquor-like taste of the low-alcohol beverage or the non-alcohol beverage. The method includes a step of adjusting the total content of the aliphatic alcohol having 4 or 5 carbon atoms in the beverage to 1 to 300 ppm and a step of adding γ-aminobutyric acid to the beverage. The content of γ-aminobutyric acid in the beverage is preferably adjusted to 10 ppm or more.

The method for adjusting the contents of the components in the beverage should be obvious from the above descriptions for the beverage. The timing thereof is not limited, either. For example, the above-mentioned steps may be performed at the same time, separately, or in random order. The finally obtained beverage only has to satisfy the above-mentioned conditions. The preferable content ranges of the above-mentioned components are as mentioned above with respect to the beverage. Furthermore, the specific examples and the amounts of the additional other components are also as mentioned above with respect to the beverage.

### (Numerical range)

In the description for clarification, the numerical ranges as used herein include their end points, namely the lower limit values and the upper limit values.

### EXAMPLES

Although the present invention will be described based on Example hereinafter, the present invention is not limited to these Examples.

### (Test Example 1) Influence of aliphatic alcohol having 4 or 5 carbon atoms

The liquor-like taste imparting effect of the aliphatic alcohol having 4 or 5 carbon atoms was examined.

To an aqueous solution having an alcohol content (Alc.) of 0 v/v%, 3-methyl-1-butanol was added at the contents shown in the following table to prepare various samples.

Specifically, if the aliphatic alcohol content was 1 ppm, 0.1 mg of 3-methyl-1-butanol was weighed and added to 50 ml of ion-exchange water, the mixture was well stirred, followed by the visual confirmation that undissolved 3-methyl-1-butanol did not remain, ion-exchange water was further added to adjust the total volume to 100 ml with a volumetric flask, and this was used as a beverage model solution (sample beverage). Other beverage model solutions were prepared in the same way so that the contents were as shown in the following table. As a control, ion-exchange water (Sample No. 1) was used.

Four special panelists sensorily evaluated whether the effects of imparting a liquor-like taste (thickness typical of liquor; brewage-like depth, fullness, and aftertaste; and slight bitterness) in the obtained various samples were felt on a scale of one to six with "felt very strongly" evaluated as 6 points and "not felt" evaluated as 1 point. The evaluation results of the four panelists were totaled. If the average thereof was 1 or more and less than 2, the sample was evaluated as "-". If the average thereof was 2 or more and less than 3, the sample was evaluated as "±". If the average thereof was 3 or more and less than 4, the sample beverage was evaluated as "+". If the average thereof was 4 or more and less than 5, the sample was evaluated as "++". If the average thereof was 5 or more, the sample was evaluated as "+++".

The panelists established the common understanding of the relationship between the scores and the tastes beforehand to reduce the difference in evaluation between the individuals, and then performed the evaluation tests. The following table shows the results of the test.

**[Table 1]**

| Sample No. | 1 | 2 | 3 | 4 | 5 | 6 | 7 | 8 | 9 | 10 | 11 | 12 |
|---|---|---|---|---|---|---|---|---|---|---|---|---|
| 3-Methyl-1 -butanol (ppm) | 0 | 1 | 2 | 3 | 5 | 10 | 30 | 50 | 80 | 100 | 200 | 300 |
| Impartment of liquor-like taste | - | ++ | ++ | +++ | +++ | +++ | +++ | +++ | +++ | ++ | ++ | + |
| Free comment | - | Fullness and thickness of taste typical of liquor are added, and impartinent of liquor-like taste is perceived. | Fullness and thickness of taste typical of liquor are added, and impartment of liquor-like taste is perceived. | Fullness and aftertaste typical of liquor are felt, and impartment of preferable liquor-like taste is perceived. | Fullness and aftertaste typical of liquor are felt, and impartment of preferable liquor-like taste is perceived. | Fullness and aftertaste typical of liquor are felt, and impartment of preferable liquor-like taste is perceived. | Fullness and aftertaste typical of liquor are felt, and impartment of preferable liquor-like taste is perceived. | Fullness and aftertaste typical of liquor are felt, and impartment of preferable liquor-like taste is perceived. | Fullness and aftertaste typical of liquor are felt, and impartment of preferable liquor-like taste is perceived. | Fullness and aftertaste typical of liquor are felt, but slight chemical-like smell is emitted. | Fullness and aftertaste typical of liquor are felt, but slight chemical-like smell is emitted. | Chemical-like smell is strong, and impartment of preferable liquor-like taste is not perceived. |

A liquor-like taste was imparted by adding 3-methyl-1-butanol, and preferable results were obtained in a particular content range.

### (Test Example 2) Influence of GABA

GABA was added to the beverage model solution Sample No. 6, prepared in Test Example 1 and containing 3-methyl-1-butanol at a content of 10 ppm, in various amounts to prepare samples as the beverage model solutions, and the effect of increasing a liquor-like taste with GABA was examined. The amount of GABA added is as shown in the following table.

The samples were subjected to sensory evaluation.

Four special panelists sensorily evaluated whether the effects of increasing the liquor-like taste were felt in the samples on a scale of one to six with "felt very strongly" evaluated as 6 points and "not felt" evaluated as 1 point using the sample not containing GABA as a control (Ctrl). The evaluation results of the four panelists were totaled. If the average thereof was 1 or more and less than 2, the sample was evaluated as "-". If the average thereof was 2 or more and less than 3, the sample was evaluated as "±". If the average thereof was 3 or more and less than 4, the sample was evaluated as "+". If the average thereof was 4 or more and less than 5, the sample was evaluated as "++". If the average thereof was 5 or more, the sample was evaluated as "+++". In this case, the panelists also established the common understanding of the relationship between the scores and the tastes beforehand to reduce the difference in evaluation between the individuals, and then performed the evaluation tests.

The following table shows the results of the test. It was confirmed that GABA can increase the liquor-like taste.

**[Table 2]**

| Sample No. | 13 | 14 | 15 | 16 | 17 | 18 | 19 | 20 | 21 | 22 | 23 | 24 | 25 | 26 |
|---|---|---|---|---|---|---|---|---|---|---|---|---|---|---|
| GABA (ppm) | 10 | 40 | 50 | 60 | 70 | 100 | 150 | 200 | 250 | 300 | 500 | 1000 | 2000 | 5000 |
| Increase in liquor-like taste | ± | + | ++ | +++ | +++ | +++ | +++ | +++ | +++ | +++ | +++ | +++ | +++ | +++ |
| Free comment | As compared with Ctrl, containing no GABA, difference in thickness and the like are felt, but increase in liquor-like taste is scarcely felt. | Slight thickness and bitterness are added to aftertaste, and increase in liquor-like taste is perceived. | Thickness and bitterness are added to aftertaste, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. |

### (Test Example 3) Influence of GABA and aliphatic alcohol having 4 or 5 carbon atoms

Various samples as beverage model solutions were prepared in accordance with the methods described in Test Examples 1 and 2. The amounts of aliphatic alcohol (3-methyl-1-butanol) and GABA added are as shown in the following table.

The samples were subjected to the sensory evaluation in the same way as in Test Example 2 to confirm the effect of increasing a liquor-like taste. It is a sample containing 3-methyl-1-butanol at a content of 1 or 200 ppm and no GABA that is used as a control. The results of the test are shown in the following table. A high effect of increasing the liquor-like taste was perceived in a particular range.

**[Table 3]**

| Sample No. | 27 | 28 | 29 | 30 | 31 | 32 | 33 | 34 | 35 | 36 |
|---|---|---|---|---|---|---|---|---|---|---|
| 3-Methyl-1-butanol (ppm) | 1 | 1 | 1 | 1 | 1 | 200 | 200 | 200 | 200 | 200 |
| GABA (ppm) | 0 | 60 | 200 | 500 | 5000 | 0 | 60 | 200 | 500 | 5000 |
| Increase in liquor-like taste | | ++ | +++ | +++ | +++ | | +++ | +++ | +++ | +++ |
| Free comment | - | Thickness and bitterness are added to aftertaste, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. |

### (Test Example 4) Influence of type of aliphatic alcohol having 4 or 5 carbon atoms

In the same way as the beverage model solution of Sample No. 6 in Test Example 1, containing 3-methyl-1-butanol at a content of 10 ppm, samples containing 2-methyl-1-butanol or 2-methyl-1-propanol instead of 3-methyl-1-butanol in the same amount were prepared. The obtained two samples were subjected to the sensory evaluation in the same way as in Test Example 1, and the same results as the result of Sample No. 6 were obtained. Accordingly, it was found that a wide variety of aliphatic alcohols having 4 or 5 carbon atoms lead to the same effect of imparting a liquor-like taste.

GABA was then added to those two samples in various amounts to examine the effect of increasing a liquor-like taste. The same sensory evaluation as in Test Example 2 led to the results shown in the following table.

**[Table 4]**

| Aliphatic alcohol | 2-Methyl-1-butanol | | | | | 2-Methyl-1-propanol | | | | |
|---|---|---|---|---|---|---|---|---|---|---|
| Content of aliphatic alcohol (ppm) | 10 | 10 | 10 | 10 | 10 | 10 | 10 | 10 | 10 | 10 |
| GABA (ppm) | 0 | 60 | 200 | 500 | 5000 | 0 | 60 | 200 | 500 | 5000 |
| Increase in liquor-like taste | | ++ | +++ | +++ | +++ | | + | +++ | +++ | +++ |
| Free comment | | Thickness and bitterness are added to aftertaste, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | | Slight thickness and bitterness are added to aftertaste, and increase in liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. | Thickness and bitterness typical of liquor are felt besides fullness and aftertaste typical of liquor, and increase in preferable liquor-like taste is perceived. |

Even though 2-methyl-1-butanol or 2-methyl-1-propanol was substituted for 3-methyl-1-butanol, the same tendency as in the case using 3-methyl-1-butanol was observed.

## Claims

1. A beverage having an alcohol content of less than 3 v/v%, comprising an aliphatic alcohol having 4 or 5 carbon atoms and γ-aminobutyric acid, wherein a total content of the aliphatic alcohol is 1 to 300 ppm.

2. The beverage according to claim 1, wherein a content of γ-aminobutyric acid is 10 ppm or more.

3. The beverage according to claim 1 or 2, wherein the total content of the aliphatic alcohol is 1 to 200 ppm, and the content of γ-aminobutyric acid is 50 to 5000 ppm.

4. The beverage according to any one of claims 1 to 3, wherein the aliphatic alcohol having 4 or 5 carbon atoms is selected from the group consisting of 2-methyl-1-propanol, 3-methyl-1-butanol, and 2-methyl-1-butanol.

5. The beverage according to any one of claims 1 to 4, wherein the beverage has an alcohol content of 0.00 v/v%.

6. A method for increasing a liquor-like taste of a beverage having an alcohol content of less than 3 v/v%, comprising:
a step of adjusting a total content of an aliphatic alcohol having 4 or 5 carbon atoms in the beverage to 1 to 300 ppm, and
a step of adding γ-aminobutyric acid to the beverage.

7. The method according to claim 6, wherein a content of γ-aminobutyric acid in the beverage is adjusted to 10 ppm or more.
